# EUROPEAN PATENT APPLICATION

(11) **EP 1 308 911 A2**
(43) Date of publication of application: **07.05.2003**
(21) Application number: 02257502.1
(22) Date of filing: 29.10.2002
(51) Int. Cl.: G07F 17/16

(54) **Charging server and charging method**

(30) Priority: 01.11.2001 JP 2001336874
(71) Applicant: Pioneer Corporation, Meguro-ku, Tokyo (JP)
(72) Inventor: Ichihara, Naohiko, c/o Pioneer Corporation, Tsurugashima-shi, Saitama (JP)
(74) Representative: Haley, Stephen

(57) **Abstract**

In a charging server for charging a toll for information transmission and reception occurring when predetermined information is transmitted to and received from an information server 40 by an information terminal 20 via a communication line 30 according to a communication toll occurring when the communication line 30 is used and an information toll occurring for the information communicated on the communication line 30, a return toll in held specific information toll and held specific information communication toll is calculated based on a determination signal as to whether or not at least one piece of the specific information is adopted as display information of the information terminal 20, and a toll is charged based on the previously calculated information toll and the return toll.

## Description

### 1. Field of the Invention

This invention relates to a charging server and a charging method for charging a toll for information transmission and reception occurring when predetermined information is transmitted to and received from an information server by an information terminal via a communication line.

### 2. Description of the Related Art

In recent years, for example, a communication navigation system including a vehicle-installed communication navigation apparatus for acquiring information of a map, etc., to a destination from an ASP (application service provider) of an information provider through a common carrier by mobile communications has been proposed. In such a system, a communication toll charging server for charging a communication toll paid to the common carrier owning the communication line is installed and each time the communication line is used, the user of the communication navigation apparatus is charged the communication toll for use of the communication line. An information toll charging server for charging an information toll paid to the ASP owning the information server is also installed and each time information is distributed, the user is charged the information toll for distribution of the information.

However, in the communication navigation system as described above, if a request to send information is made or information is distributed regardless of whether or not the user makes a request. Therefore, for example, when the user does not make an explicit request, if information of a map, etc., is previously distributed for the purpose of improving the convenience of the user, the user is charged the communication toll and the information toll even if the user does not display (does not use) the information. Such a service is against the user's interests.

It is therefore an object of the invention to provide a charging server and a charging method according to which, for example, when a user's explicit request is not made, if information of a map, etc., is previously distributed for the purpose of improving the convenience of the user, such a service is not against the user's interests and can be conducted aggressively.

To the end, according to a first aspect of the invention, there is provided a charging server for charging a toll for information transmission and reception occurring when predetermined information is transmitted to and received from an information server by an information terminal via a communication line according to a communication toll occurring when the communication line is used and an information toll occurring for the information communicated on the communication line, the charging server comprising communication toll calculation means for calculating the toll to be charged in response to use of the communication line based on a predetermined charge system; first charging means for charging the communication toll calculated by the communication toll calculation means; information toll calculation means for calculating the toll to be charged in response to the amount of the information communicated on the communication line based on a predetermined charge system; hold means for temporarily holding a specific information toll occurring for specific information determined based on a predetermined condition, of the information toll calculated by the information toll calculation means and a specific information communication toll corresponding to a communication toll occurring when the specific information is transmitted and received as targets to be returned; return toll calculation means for calculating a return toll in the specific information toll and the specific information communication toll held in the hold means based on a determination signal as to whether or not at least one piece of the specific information is adopted as display information of the information terminal; and second charging means for charging a toll based on the information toll calculated by the information toll calculation means and the return toll calculated by the return toll calculation means.

According to the charging server, the return toll in the held specific information toll and the held specific information communication toll is calculated based on the determination signal as to whether or not at least one piece of the specific information is adopted as display information of the information terminal, and a toll is charged based on the previously calculated information toll and the return toll.

The charging server in a second aspect of the invention is characterized by the fact that in the charging server in the first aspect of the invention, to display at least one piece of the specific information on the information terminal as objective information, the return toll calculation means calculates the return toll with the specific information toll and the specific information communication toll for the information other than the one information piece as the targets to be returned and to display none of the specific information on the information terminal as objective information, the return toll calculation means calculates the return toll with all of the specific information toll and the specific information communication toll as the targets to be returned.

According to the charging server, to display at least one piece of the specific information on the information terminal as objective information, the return toll is calculated with the specific information toll and the specific information communication toll for the information other than the one information piece as the targets to be returned, and to display none of the specific information on the information terminal as objective information, the return toll is calculated with all of the specific information to 11 and the specific information communication toll as the targets to be returned.

The charging server in a third aspect of the invention is characterized by the fact that in the charging server in the first aspect of the invention, in the hold means, the specific condition is transmission.and reception of information to select one item from among a plurality of items.

According to the charging server, the specific information is determined based on transmission and reception of information to select one item from among a plurality of items.

The charging server in a fourth aspect of the invention is characterized by the fact that in the charging server in the first aspect of the invention, in the holdmeans, the specific condition is transmission and reception of information to select one item from among a plurality of items, the one item is a route search for making a search for a route to a destination, conducted by the information server, and when a signal for requesting the information server to conduct the route search is transmitted from the information terminal via the communication line to the information server, the temporarily holding operation of the specific information toll and the specific information communication toll is started and when the result of the route search is distributed from the information server via the communication line to the information terminal, the temporarily holding operation is terminated.

According to the charging server, the specific information is determined based on transmission and reception of information to select one item from among a plurality of items. When a signal for requesting the information server to conduct the route search is transmitted from the information terminal via the communication line to the information server, the temporarily holding operation of the specific information toll and the specific information communication toll is started and when the result of the route search is distributed from the information server via the communication line to the information terminal, the temporarily holding operation is terminated.

The charging server in a fifth aspect of the invention is characterized by the fact that in the charging server in the first aspect of the invention, the specific information toll temporarily held in the hold means is calculated based on the number of packets of data downloaded via the communication line from the information server, and the specific information communication toll temporarily held in the hold means is calculated based on the number of packets of data uploaded via the communication line to the information server and is calculated based on the number of packets of data downloaded via the communication line from the information server.

According to the charging server, the temporarily held specific information toll is calculated based on the number of packets of data downloaded via the communication line from the information server, and the temporarily held specific information communication toll is calculated based on the number of packets of data uploaded via the communication line to the information server and is calculated based on the number of packets of data downloaded via the communication line from the information server.

According to a sixth aspect of the invention, there is provided a charging method for charging a toll for information transmission and reception occurring when predetermined information is transmitted to and received from an information server by an information terminal via a communication line according to a communication toll occurring when the communication line is used and an information toll occurring for the information communicated on the communication line by first and second charging means, the charging method comprising the steps of transmitting a signal for requesting objective information to be acquired from the information terminal via the communication line to the information server; calculating the communication toll involved in the signal based on a predetermined charge system and holding the communication toll in the second charging means; distributing the objective information from the information server via the communication line to the information terminal in response to the signal; calculating the information toll of the objective information based on a predetermined charge system and holding the information toll in the second charging means; calculating the communication toll involved in the objective information based on the predetermined charge system and holding the communication toll in the second charging means; and deducing the communication toll involved in the signal and the communication toll involved in the objective information from the information toll of the objective information by the second charging means and charging the result.

According to the charging method, the communication toll involved in the signal for requesting the objective information to be acquired and the communication toll involved in the objective information are deduced from the information toll of the objective information by the second charging means and the result is charged.

The charging method in a seventh aspect of the invention is characterized by the fact that in the charging method in the sixth aspect of the invention, the objective information is map information involved in a route search for making a search for a route to a destination, conducted by the information server.

According to the charging method, the communication toll involved in the signal for requesting the map information to be acquired and the communication toll involved in the map information are deduced from the information toll of the map information involved in the route search and the result is charged.

The charging method in an eighth aspect of the invention is characterized by the fact that in the charging method in the sixth aspect of the invention, the communication toll involved in the signal is calculated based on the number of packets of data uploaded via the communication line to the information server, the information toll of the objective information is calculated based on the number of packets of data downloaded via the communication line from the information server, and the communication toll involved in the objective information is calculated based on the number of packets of data downloaded via the communication line from the information server.

According to the charging method, the communication toll involved in the signal for requesting the objective information to be acquired is calculated based on the number of packets of data uploaded via the communication line to the information server, the information toll of the objective information is calculated based on the number of packets of data downloaded via the communication line from the information server, and the communication toll involved in the objective information is calculated based on the number of packets of data downloaded via the communication line from the information server.
FIG. 1 is a block diagram to show the configuration of a communication navigation system in a first embodiment of the invention;
FIG. 2 is a block diagram to show the specific configurations of a common carrier and an information toll charging server in the communication navigation system of the first embodiment of the invention;
FIG. 3 is a sequence chart to show an example of the operation of the communication navigation system of the first embodiment of the invention;
FIG. 4 is a drawing to describe the charging operation in the operation of the communication navigation system of the first embodiment of the invention shown in FIG. 3;
FIG. 5 is a drawing to describe the information toll discount operation in the charging operation of the communication navigation system of the first embodiment of the invention shown in FIG. 4;
FIG. 6 is a block diagram to show the configuration of a communication navigation system in a second embodiment of the invention;
FIG. 7 is a block diagram to show the specific configurations of an ASP and an information toll charging server in the communication navigation system of the second embodiment of the invention; and
FIG. 8 is a sequence chart to show an example of the operation of the communication navigation system of the second embodiment of the invention.

Referring now to the accompanying drawings, there are shown first and second embodiments of the invention. The first and second embodiments are provided each by applying the invention to a charging server and a charging method in a communication navigation system.

### (First Embodiment)

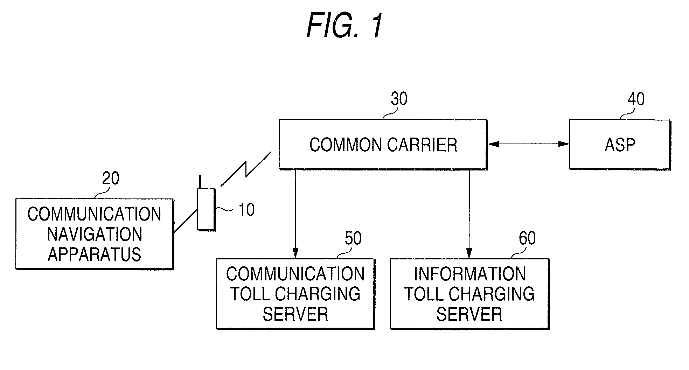

FIG. 1 is a block diagram to show the configuration of a communication navigation system in the first embodiment of the invention. In FIG. 1, a vehicle-installed communication navigation apparatus 20 comprising a communication section 10 for conducting mobile communications is an information terminal for acquiring and displaying information of a map, etc., to a destination. A common carrier 30 as communication toll calculation means and information toll calculation means owing a communication line used for mobile communications, etc., with the communication navigation apparatus 20 and an ASP (application service provider) 40 of an information provider owing an information server storing information of a map, etc., to a destination are connected to each other. Further, the common carrier 30 comprises a communication toll charging server 50 as first charging means for charging the user of the communication navigation apparatus 20 the communication toll paid to the common carrier 30 and an information toll charging server 60 as hold means, return toll calculation means, and second charging means for charging the user the information toll paid to the ASP 40. In the embodiment, the communication toll is paid directly to the common carrier 30 and the information toll is paid to the ASP 40 through the common carrier 30. That is, the information toll is collected by the common carrier 30 on behalf of the ASP 40 and a commission is deduced from the information toll and then the result is paid to the ASP 40.

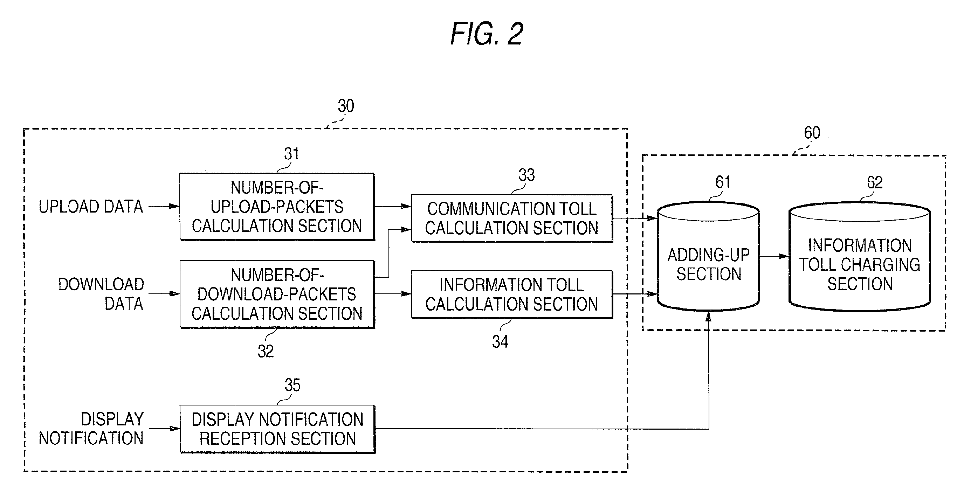

FIG. 2 is a block diagram to show the specific configurations of the common carrier 30 and the information toll charging server 60 in the communication navigation system of the embodiment. In FIG. 2, the common carrier 30 comprises a number-of-upload-packets calculation section 31 for calculating the number of packets based on the data uploaded to the ASP 40 from the common carrier 30 in response to a request for acquiring objective information (information of a map, etc., to the destination) from the communication navigation apparatus 20, a number-of-download-packets calculation section 32 for calculating the number of packets based on the data (objective information) downloaded to the common carrier 30 from the ASP 40 in response to the request, a communication toll calculation section 33 for calculating a communication toll based on the number of upload packets calculated by the number-of-upload-packets calculation section 31 or the number of download packets calculated by the number-of-download-packets calculation section 32, an information toll calculation section 34 for calculating an information toll based on the number of download packets calculated by the number-of-download-packets calculation section 32, and a display notification reception section 35 for receiving a display notification to the effect that the acquired objective information is displayed from the communication navigation apparatus 20 and outputting a hold reduction instruction as a determination signal for causing the information toll charging server 60 to perform the charging operation. On the other hand, the information toll charging server 60 comprises an adding-up section 61 for performing processing of adding up the communication tolls calculated by the communication toll calculation section 33 and the information tolls calculated by the information toll calculation section 34 for each user and deducing the added-up communication toll from the added-up information toll in response to the hold reduction instruction from the display notification reception section 35 and an information toll charging section 62 for receiving the result of deducing the communication toll from the added-up information toll from the adding-up section 61 and charging the user the information toll.

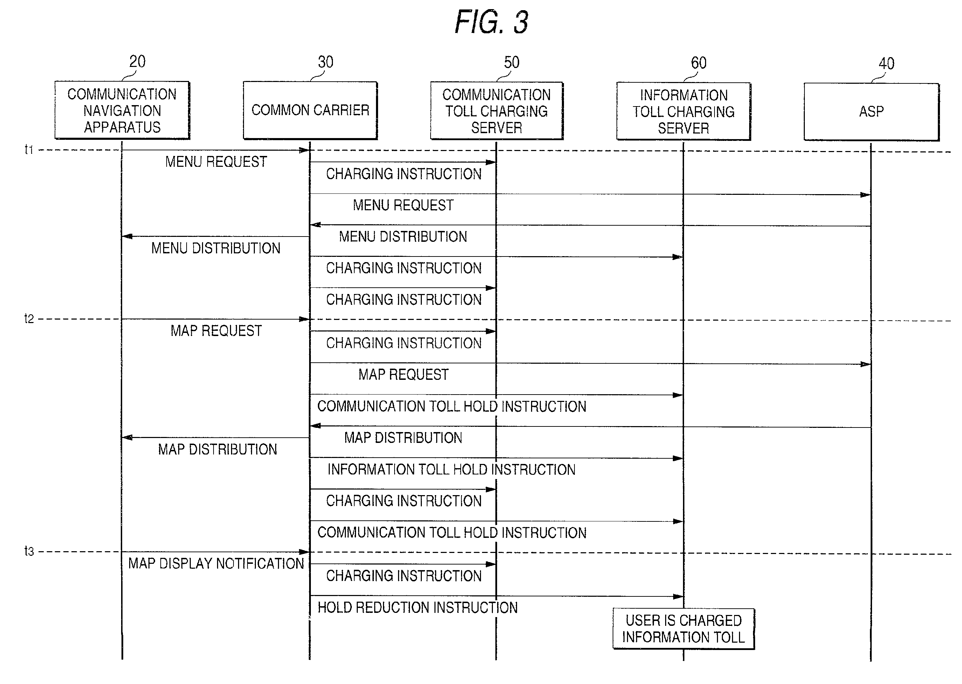

The described communication navigation system of the embodiment operates, for example, as shown in a sequence chart of FIG. 3. In FIG. 3, first, if the user performs operation for requesting the communication navigation apparatus 20 to display a menu (nonspecific information), the communication navigation apparatus 20 transmits a menu request to the common carrier 30 (time. t₁). Next, the common carrier 30 transmits a charging instruction to the communication toll charging server 50 in response to the menu request and further transmits the menu request to the ASP 40. In the communication toll charging server 50, the user is charged, for example, 2 yen based on a predetermined charge system as the communication toll for the menu request transmitted from the communication navigation apparatus 20 to the common carrier 30. The ASP 40 distributes the requested menu to the common carrier 30 in response to the menu request received from the common carrier 30. Next, the common carrier 30 distributes the menu to the communication navigation apparatus 20 in response to the menu distribution. The common carrier 30 transmits a charging instruction to the information toll charging server 60 and further transmits a charging instruction to the communication toll charging server 50. In the information toll charging server 60, the user is charged, for example, 10 yen based on a predetermined charge system as the information toll for the menu distributed from the ASP 40 through the common carrier 30 to the communication navigation apparatus 20. In the communication toll charging server 50, the user is charged, for example, 4 yen based on the predetermined charge system as the communication toll for the menu distributed from the common carrier 30 to the communication navigation apparatus 20.

Next, if the user performs operation of requesting the communication navigation apparatus 20 to display a map to the destination (specific information) to start a route search, the communication navigation apparatus 20 transmits a map request to the common carrier 30 (time t₂). Next, the common carrier 30 transmits a charging instruction to the communication toll charging server 50 in response to the map request and transmits the map request to the ASP 40 and further transmits a communication toll hold instruction to the information toll charging server 60. In the communication toll charging server 50, the user is charged, for example, 2 yen based on the predetermined charge system as the communication toll for the map request transmitted from the communication navigation apparatus 20 to the common carrier 30. In the information toll charging server 60, for example, 2 yen is held in the adding-up section 61 as the communication toll calculated by the communication toll calculation section 33, corresponding to the communication toll for the map request transmitted from the communication navigation apparatus 20 to the common carrier 30 (see FIG. 2). Further, the ASP 40 distributes the requested map to the common carrier 30 in response to the map request received from the common carrier 30. Next, the common carrier 30 distributes the map to the communication navigation apparatus 20 in response to the map distribution. The common carrier 30 transmits an information toll hold instruction to the information toll charging server 60 and transmits a charging instruction to the communication toll charging server 50 and further transmits a communication toll hold instruction to the information toll charging server 60. In the information toll charging server 60, for example, 70 yen is held in the adding-up section 61 as the information toll calculated by the information. toll calculation section 34, corresponding to the information toll for the map distributed from the ASP 40 through the common carrier 30 to the communication navigation apparatus 20 (see FIG. 2). In the communication toll charging server 50, the user is charged, for example, 30 yen based on the predetermined charge system as the communication toll for the map distributed from the common carrier 30 to the communication navigation apparatus 20. Further, in the information toll charging server 60, for example, 30 yen is held in the adding-up section 61 as the communication toll calculated by the communication toll calculation section 33, corresponding to the communication toll for the map distributed from the common carrier 30 to the communication navigation apparatus 20.

Next, if the user performs operation of instructing the communication navigation apparatus 20 to display the acquired map, the communication navigation apparatus 20 transmits a map display notification to the effect that the map is displayed to the common carrier 30 (time t₃). Next, the common carrier 30 transmits a charging instruction to the communication toll charging server 50 and further transmits a hold reduction instruction to the information toll charging server 60 in response to the map display notification. In the communication toll charging server 50, the user is charged, for example, 2 yen based on the predetermined charge system as the communication toll for the map display notification transmitted from the communication navigation apparatus 20 to the common carrier 30. In the information toll charging server 60, the communication toll as the return toll (2 yen + 30 yen) is deduced from the information toll (70 yen) held in the adding-up section 61 and the result (38 yen) is transmitted to the information toll charging section 62 and the user is charged the result as the information toll (see FIG. 2).

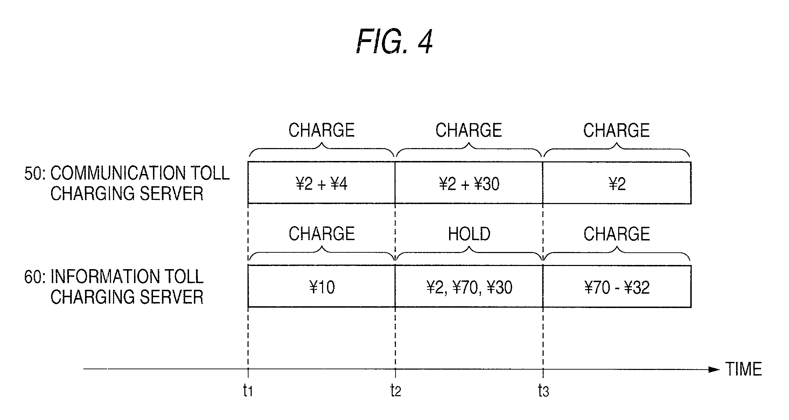

That is, in the embodiment, the charging operation as shown in FIG. 4 is performed. In FIG. 4, first, to acquire the menu (nonspecific information) in the communication navigation apparatus 20 (time t₁ to time t₂), in the communication toll charging server 50, the user is charged 2 yen as the communication toll for the menu request transmitted from the communication navigation apparatus 20 to the common carrier 30 and further is charged 4 yen as the communication toll for the menu distributed from the common carrier 30 to the communication navigation apparatus 20. On the other hand, in the information toll charging server 60, the user is charged 10 yen as the information toll for the menu distributed from the ASP 40 through the common carrier 30 to the communication navigation apparatus 20.

Next, to acquire the map to the destination of the objective information (specific information) in the communication navigation apparatus 20 (time t₂ to time t₃), in the communication toll charging server 50, the user is charged 2 yen as the communication toll for the map request transmitted from the communication navigation apparatus 20 to the common carrier 30 and further is charged 30 yen as the communication toll for the map distributed from the common carrier 30 to the communication navigation apparatus 20. On the other hand, in the information toll charging server 60, 2 yen is held in the adding-up section 61 as the communication toll calculated by the communication toll calculation section 33, corresponding to the communication toll for the map request transmitted from the communication navigation apparatus 20 to the common carrier 30, and 70 yen is held in the adding-up section 61 as the information toll calculated by the information toll calculation section 34, corresponding to the information toll for the map distributed from the ASP 40 through the common carrier 30 to the communication navigation apparatus 20, and further 30 yen is held in the adding-up section 61 as the communication toll calculated by the communication toll calculation section 33, corresponding to the communication toll for the map distributed from the common carrier 30 to the communication navigation apparatus 20.

To display the acquired map in the communication navigation apparatus 20 (time t₃ and later) , in the communication toll charging server 50, the user is charged 2 yen as the communication toll for the map displaynotification transmitted from the communication navigation apparatus 20 to the common carrier 30. On the other hand, in the information toll charging server 60, processing of deducing the communication toll as the return toll from the information toll held in the adding-up section 61 (70 yen - 32 yen) is performed and the result (38 yen) is transmitted to the information toll charging section 62 and the user is charged the result as the information toll.

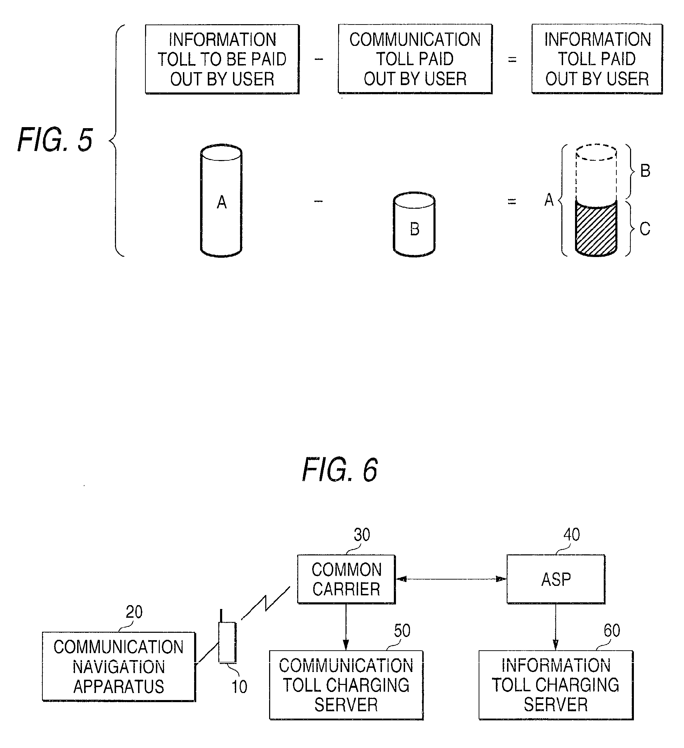

Thus, to acquire the map to the destination of the objective information in the communication navigation apparatus 20, the user is charged 32 yen as the communication toll, but not charged the information toll. When the acquired map is displayed on the communication navigation apparatus 20, then processing of deducing the communication toll (32 yen) from the held information toll (70 yen) is performed and the user is charged the result (38 yen) as the information toll. That is, the user is not charged the information toll until the acquired map is displayed. When the acquired map is displayed, the user is charged the value provided by deducing communication toll B paid out by the user (32 yen) from information toll A to be paid out by the user (70 yen) as information toll C paid out by the user (38 yen) so as to discount the information toll, as shown in FIG. 5. Therefore, according to the charging server and the charging method of the embodiment, for example, when a user's explicit request is not made, if information of a map, etc., is previously distributed for the purpose of improving the convenience of the user, such a service is not against the user's interests and can be conducted aggressively. The user can be given a feeling of a comparatively low information toll and access to the ASP 40 by the user can be promoted.

### (Second Embodiment)

FIG. 6 is a block diagram to show the configuration of a communication navigation system in the second embodiment of the invention. In FIG. 6, a vehicle-installed communication navigation apparatus 20 comprising a communication section 10 for conducting mobile communications is an information terminal for acquiring and displaying information of a map, etc., to a destination. A common carrier 30 as communication toll calculation means owing a communication line used for mobile communications, etc., with the communication navigation apparatus 20 and an ASP (application service provider) 40 of an information provider as information toll calculation means owing an information server storing information of a map, etc., to a destination are connected to each other. Further, the common carrier 30 comprises a communication toll charging server 50 as first charging means for charging the user of the communication navigation apparatus 20 the communication toll paid to the common carrier 30 and the ASP 40 comprises an information toll charging server 60 as hold means, return toll calculation means, and second charging means for charging the user the information toll paid to the ASP 40. In the embodiment, the communication toll is paid directly to the common carrier 30 and the information toll is paid directly to the ASP 40.

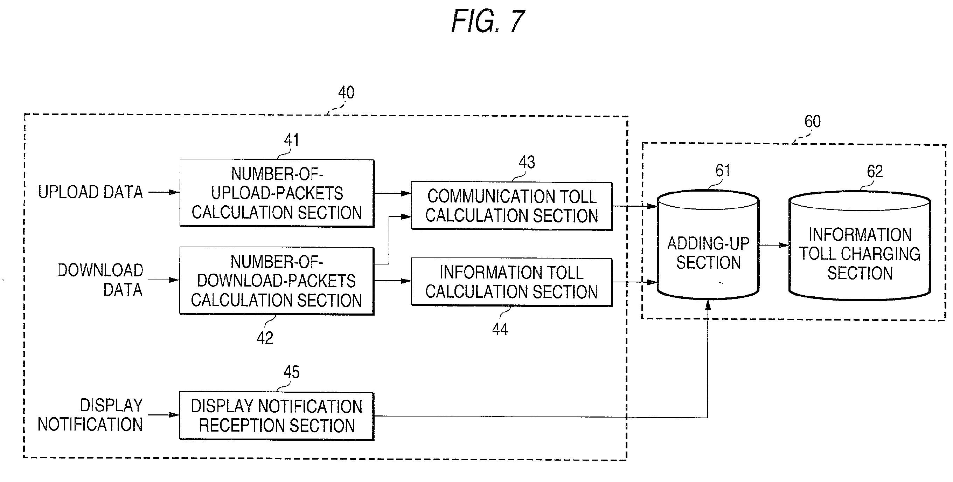

FIG. 7 is a block diagram to show the specific configurations of the ASP 40 and the information toll charging server 60 in the communication navigation system of the embodiment. In FIG. 7, the ASP 40 comprises a number-of-upload-packets calculation section 41 for calculating the number of packets based on the data uploaded to the ASP 40 from the common carrier 30 in response to a request for acquiring objective information (information of a map, etc., to the destination) from the communication navigation apparatus 20, a number-of-download-packets calculation section 42 for calculating the number of packets based on the data (objective information) downloaded to the common carrier 30 from the ASP 40 in response to the request, a communication toll calculation section 43 for calculating a communication toll based on the number of upload packets calculated by the number-of-upload-packets calculation section 41 or the number of download packets calculated by the number-of-download-packets calculation section 42, an information toll calculation section 44 for calculating an information toll based on the number of download packets calculated by the number-of-download-packets calculation section 42, and a display notification reception section 45 for receiving a display notification to the effect that the acquired objective information is displayed from the common carrier 30 and outputting a hold reduction instruction as a determination signal for causing the information toll charging server 60 to perform the charging operation. On the other hand, the information toll charging server 60 comprises an adding-up section 61 for performing processing of adding up the communication tolls calculated by the communication toll calculation section 43 and the information tolls calculated by the information toll calculation section 44 for each user and deducing the added-up communication toll from the added-up information toll in response to the hold reduction instruction from the display notification reception section 45 and an information toll charging section 62 for receiving the result of deducing the communication toll from the added-up information toll from the adding-up section 61 and charging the user the information toll.

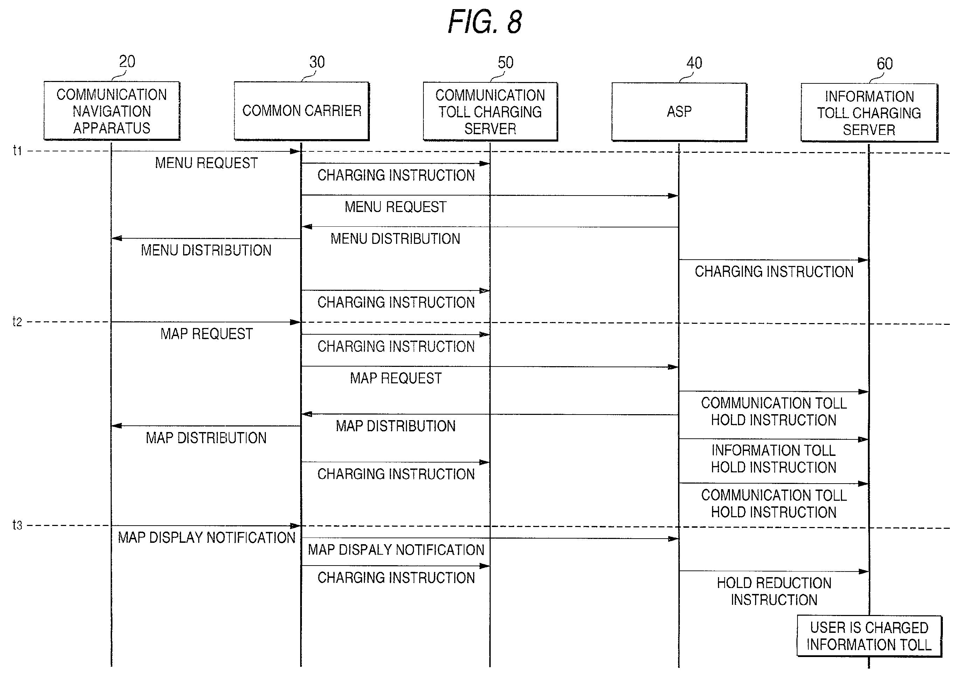

The described communication navigation system of the embodiment operates, for example, as shown in a sequence chart of FIG. 8. In FIG. 8, first, if the user performs operation for requesting the communication navigation apparatus 20 to display a menu (nonspecific information), the communication navigation apparatus 20 transmits a menu request to the common carrier 30 (time t₁). Next, the common carrier 30 transmits a charging instruction to the communication toll charging server 50 in response to the menu request and further transmits the menu request to the ASP 40. In the communication toll charging server 50, the user is charged, for example, 2 yen based on a predetermined charge system as the communication toll for the menu request transmitted from the communication navigation apparatus 20 to the common carrier 30. The ASP 40 distributes the requested menu to the common carrier 30 in response to the menu request received from the common carrier 30. Next, the common carrier 30 distributes the menu to the communication navigation apparatus 20 in response to the menu distribution. The ASP 40 transmits a charging instruction to the information toll charging server 60 and further the common carrier 30 transmits a charging instruction to the communication toll charging server 50. In the information toll charging server 60, the user is charged, for example, 10 yen based on a predetermined charge system as the information toll for the menu distributed from the ASP 40 through the common carrier 30 to the communication navigation apparatus 20. In the communication toll charging server 50, the user is charged, for example, 4 yen based on the predetermined charge system as the communication toll for the menu distributed from the common carrier 30 to the communication navigation apparatus 20.

Next, if the user performs operation of requesting the communication navigation apparatus 20 to display a map to the destination (specific information) to start a route search, the communication navigation apparatus 20 transmits a map request to the common carrier 30 (time t₂). Next, the common carrier 30 transmits a charging instruction to the communication toll charging server 50 in response to the map request and transmits the map request to the ASP 40 and further the ASP 40 transmits a communication toll hold instruction to the information toll charging server 60. In the communication toll charging server 50, the user is charged, for example, 2 yen based on the predetermined charge system as the communication toll for the map request transmitted from the communication navigation apparatus 20 to the common carrier 30. In the information toll charging server 60, for example, 2 yen is held in the adding-up section 61 as the communication toll calculated by the communication toll calculation section 43, corresponding to the communication toll for the map request transmitted from the communication navigation apparatus 20 to the common carrier 30 (see FIG. 7). Further, the ASP 40 distributes the requested map to the common carrier 30 in response to the map request received from the common carrier 30. Next, the common carrier 30 distributes the map to the communication navigation apparatus 20 in response to the map distribution. The ASP 40 transmits an information toll hold instruction to the information toll charging server 60 and the common carrier 30 transmits a charging instruction to the communication toll charging server 50 and further the ASP 40 transmits a communication toll hold instruction to the information toll charging server 60. In the information toll charging server 60, for example, 70 yen is held in the adding-up section 61 as the information toll calculated by the information toll calculation section 44, corresponding to the information toll for the map distributed from the ASP 40 through the common carrier 30 to the communication navigation apparatus 20 (see FIG. 7). In the communication toll charging server 50, the user is charged, for example, 30 yen based on the predetermined charge system as the communication toll for the map distributed from the common carrier 30 to the communication navigation apparatus 20. Further, in the information toll charging server 60, for example, 30 yen is held in the adding-up section 61 as the communication toll calculated by the communication toll calculation section 43, corresponding to the communication toll for the map distributed from the common carrier 30 to the communication navigation apparatus 20.

Next, if the user performs operation of instructing the communication navigation apparatus 20 to display the acquired map, the communication navigation apparatus 20 transmits a map display notification to the effect that the map is displayed to the common carrier 30 (time t₃). Next, in response to the map display notification, the common carrier 30 transmits the map display notification to the ASP 40 and transmits a charging instruction to the communication toll charging server 50 and further the ASP 40 transmits a hold reduction instruction to the information toll charging server 60. In the communication toll charging server 50, the user is charged, for example, 2 yenbasedon the predetermined charge system as the communication toll for the map display notification transmitted from the communication navigation apparatus 20 to the common carrier 30. In the information toll charging server 60, the communication toll as the return toll (2 yen + 30 yen) is deduced from the information toll (70 yen) held in the adding-up section 61 and the result (38 yen) is transmitted to the information toll charging section 62 and the user is charged the result as the information toll (see FIG. 7). According to the charging server and the charging method of the embodiment, similar advantages to those of the first embodiment can be provided.

In the first and second embodiments, to display the acquired map on the communication navigation apparatus 20, all of the communication toll (32 yen) is deduced from the held information toll (70 yen), but a part of the communication toll may be deduced. The communication toll may be deduced from the information toll at the next access time or later rather than following the access time to the ASP 40. In this case, repeated access to the ASP 40 by the user can be promoted. Further, a point system may be adopted for the information toll so as to hold the communication toll as points.

In the first and second embodiments, the communication navigation apparatus 20 is used as the information terminal, but a vehicle-installed audio video (AV) apparatus, a PDA (Personal Digital Assistance), a mobile telephone, etc., may be used.

Further, the invention can also be applied in the following cases where:
(1) An objective music piece in music distribution is downloaded;
(2) information concerning a vehicle-installed audio video apparatus (music piece information, etc.,) is downloaded;
(3) route information, etc., set, run by the user is uploaded to the ASP;
(4) application of a game, etc., is downloaded;
(5) software (control program, etc.,) of an information terminal such as a vehicle-installed audio video apparatus is upgraded;
(6) software (game, mobile phone melody, control program of mobile telephone, etc.,) is downloaded to mobile telephone;
(7) a detailedmap is downloaded to an information terminal such as a mobile telephone, a PDA, or a communication navigation apparatus (the user is charged the information toll for downloading a schematic map with no discount and the information toll for later downloading a detailed map is discounted and the user is charged the result);
(8) stock price information and chart are downloaded;
(9) a character image, etc., is downloaded;
(10) information is automatically push-distributed.

Further, the timing at which holding the communication toll is started can also be the timing when:
(1) The user issues a map download command at the drive plane preparation time;
(2) at the drive plane preparation time, the user issues a command for downloading information to select one from among proposals and set the selected proposal in the communication navigation apparatus;
(3) the user issues a command for downloading software to upgrade software of information terminal, execute batch installation, etc.;
(4) the most recent information is distributed if information is automatically push-distributed.

Further, the timing at which the communication toll is deduced from the information toll can also be the timing when:
(1) downloaded game is started;
(2) display information of downloaded map, etc., is displayed;
(3) downloaded music piece is played back;
(4) upgrading of software is complete;
(5) push-distributed information is viewed.

As seen from the description given above, in the charging server of the invention, the return toll in the held specific information toll and the held specific information communication toll is calculated based on the determination signal as to whether or not at least one piece of the specific information is adopted as display information of the information terminal, and a toll is charged based on the previously calculated information toll and the return toll. Therefore, for example, when a user's explicit request is not made, if information of a map, etc., is previously distributed for the purpose of improving the convenience of the user, such a service is not against the user's interests and can be conducted aggressively. The user canbe given a feeling of a comparatively low information toll and access to the ASP by the user can be promoted.

## Claims

1. A charging server for charging a toll for information transmission and reception occurring when predetermined information is transmitted to and received from an information server by an information terminal via a communication line according to a communication toll occurring when the communication line is used and an information toll occurring for the information communicated on the communication line, said charging server comprising:
communication toll calculation means for calculating the toll to be charged in response to use of the communication line based on a predetermined charge system;
first charging means for charging the communication toll calculated by said communication toll calculation means;
information toll calculation means for calculating the toll to be charged in response to the amount of the information communicated on the communication line based on a predetermined charge system;
holdmeans for temporarily holding a specific information toll occurring for specific information determined based on a predetermined condition, of the information toll calculated by said information toll calculation means and a specific information communication toll corresponding to a communication toll occurring when the specific information is transmitted and received as targets to be returned;
return toll calculation means for calculating a return toll in the specific information toll and the specific information communication toll held in said hold means based on a determination signal as to whether or not at least one piece of the specific information is adopted as display information of the information terminal; and
second charging means for charging a toll based on the information toll calculated by said information toll calculation means and the return toll calculated by said return toll calculation means.

2. The charging server as claimed in claim 1 wherein to display at least one piece of the specific information on the information terminal as objective information, said return toll calculation means calculates the return toll with the specific information toll and the specific information communication toll for the information other than the one information piece as the targets to be returned and to display none of the specific information on the information terminal as objective information, said return toll calculation means calculates the return toll with all of the specific information toll and the specific information communication toll as the targets to be returned.

3. The charging server as claimed in claim 1 wherein in said hold means, the specific condition is transmission and reception of information to select one item from among a plurality of items.

4. The charging server as claimed in claim 1 wherein in said hold means, the specific condition is transmission and reception of information to select one item from among a plurality of items, the one item is a route search for making a search for a route to a destination, conducted by the information server, and when a signal for requesting the information server to conduct the route search is transmitted from the information terminal via the communication line to the information server, the temporarily holding operation of the specific information toll and the specific information communication toll is started and when the result of the route search is distributed from the information server via the communication line to the information terminal, the temporarily holding operation is terminated.

5. The charging server as claimed in claim 1 wherein the specific information toll temporarily held in said hold means is calculated based on the number of packets of data downloaded via the communication line from the information server, and the specific information communication toll temporarily held in said hold means is calculated based on the number of packets of data uploaded via the communication line to the information server and is calculated based on the number of packets of data downloaded via the communication line from the information server.

6. A charging method for charging a toll for information transmission and reception occurring when predetermined information is transmitted to and received from an information server by an information terminal via a communication line according to a communication toll occurring when the communication line is used and an information toll occurring for the information communicated on the communication line by first and second charging means, said charging method comprising the steps of:
transmitting a signal for requesting objective information to be acquired from the information terminal via the communication line to the information server;
calculating the communication toll involved in the signal based on a predetermined charge system and holding the communication toll in the second charging means;
distributing the objective information from the information server via the communication line to the information terminal in response to the signal;
calculating the information toll of the objective information based on a predetermined charge system and holding the information toll in the second charging means;
calculating the communication toll involved in the objective information based on the predetermined charge system and holding the communication toll in the second charging means; and
deducing the communication toll involved in the signal and the communication toll involved in the objective information from the information toll of the objective information by the second charging means and charging the result.

7. The charging method as claimed in claim 6 wherein the objective information is map information involved in a route search for making a search for a route to a destination, conducted by the information server.

8. The charging method as claimed in claim 6 wherein the communication toll involved in the signal is calculated based on the number of packets of data uploaded via the communication line to the information server, the information toll of the objective information is calculated based on the number of packets of data downloaded via the communication line from the information server, and the communication toll involved in the objective information is calculated based on the number of packets of data downloaded via the communication line from the information server.
